(19) **Europäisches Patentamt**

**European Patent Office**

**Office européen des brevets**

(11) **EP 1 031 837 A1**

(12) **EUROPEAN PATENT APPLICATION**

(43) Date of publication:
**30.08.2000 Bulletin 2000/35**

(51) Int. Cl.⁷: **G01P 15/135**, G01P 15/08, G01P 15/125

(21) Application number: **00301426.3**

(22) Date of filing: **23.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.02.1999 GB 9904140**

(71) Applicant:
**FIRST INERTIA SWITCH LIMITED**
**Farnborough, Hampshire GU14 0NZ (GB)**

(72) Inventor: **Kalami, Hoshi**
**Cyncoed, Cardiff (GB)**

(74) Representative:
**Boden, Keith McMurray et al**
**D. Young & Co.**
**21 New Fetter Lane**
**London EC4A 1DA (GB)**

(54) **Acceleration sensitive devices**

(57) In one aspect the present invention provides an acceleration sensor, comprising: at least one anvil plate; and a sensing plate spaced from the at least one anvil plate; wherein the sensing plate comprises a frame, a mass movably disposed relative to the frame and at least two beams supporting the mass, the sensing plate being configured such that the mass is in use moved relative to the at least one anvil plate on sufficiently accelerating the sensor with a component in a direction generally perpendicular to the plane of the sensing plate, thereby altering the spacing between the mass and the at least one anvil plate.

In another aspect an acceleration switch is provided which comprises an anvil plate and a sensing plate. A mass is movably disposed relative to a frame by means of at least two folded beams. Upon sufficient acceleration contact will be made between the movable mass and the anvil plate.

FIG.6

EP 1 031 837 A1

# Description

The present invention relates to acceleration sensitive devices.

There are many factors involved in the design of an acceleration sensitive device, such as an accelerometer or an acceleration switch. The final design usually involves a compromise between accuracy and cost. An important factor to be taken into account when designing an acceleration switch is the speed of operation, which speed is governed by how far the moving part of the switch has to move before making contact with the static part of the switch. Current sensor designs require relatively large gaps between the moving and static parts in order to prevent false triggering.

As disclosed in US-A-5381300, micromachined capacitive-effect accelerometers can be manufactured which offer high accuracy, but these accelerometers are expensive. By contrast, mass spring switches, which incorporate two beams as a hinge, as disclosed in US-A-5546805, are inexpensive, but these switches are relatively inaccurate, slow to respond and have excess resonance. Typical prior art angular acceleration sensors, which comprise four beams connecting the four corners of a peripheral frame directly to a central sensing plate, as disclosed in US-A-5546805, also suffer from similar problems, but to greater disadvantage given the linearity now expected from accelerometers in safety critical applications, such as in air bag inflation in the automotive industry.

In one aspect the present invention provides an acceleration switch, comprising: at least one anvil plate; and a sensing plate normally spaced from the at least one anvil plate; wherein the sensing plate comprises a frame, a mass movably disposed relative to the frame and at least two folded beams supporting the mass, the sensing plate being configured such that the mass is in use moved to make electrical connection with the at least one anvil plate on sufficiently accelerating the switch with a component in a direction generally perpendicular to the plane of the sensing plate. By providing beams of extended length, particularly with a folded configuration, this increased length contributes greatly to provide a reliably consistent operation.

Preferably, each of the beams comprises at least two interconnected beam elements.

More preferably, the at least two beam elements are parallel.

Preferably, the frame and the mass are integrally formed.

Preferably, the frame comprises a peripheral frame within which the mass is movably disposed.

Preferably, the mass includes a plurality of contacts for contacting the at least one anvil plate. This configuration provides that at least one of the contacts makes contact with the at least one anvil plate, which may not always be flat, and enables a more secure electrical connection to be made as the mass accelerates to contact the anvil plate.

Preferably, the acceleration switch further comprises at least one spacer disposed between the at least one anvil plate and the sensing plate.

Preferably, the acceleration switch comprises first and second anvil plates between which the sensing plate is disposed, and wherein the sensing plate is configured such that the mass is in use moved to make electrical connection with a respective one of the anvil plates on sufficiently accelerating the switch with a component in a respective one of the directions generally perpendicular to the plane of the sensing plate. This configuration, in sandwiching the sensing plate between the anvil plates, advantageously protects the delicate structure of the sensing plate from the environment. Further, this configuration advantageously provides for squeeze film damping, and, in being sensitive to acceleration in two directions, is insensitive to off-axis accelerations.

Preferably, the acceleration switch comprises first and second spacers disposed between the sensing plate and respective ones of the first and second anvil plates.

In another aspect the present invention provides an acceleration sensor, comprising: at least one anvil plate; and a sensing plate spaced from the at least one anvil plate; wherein the sensing plate comprises a frame, a mass movably disposed relative to the frame and at least two beams supporting the mass, the sensing plate being configured such tat the mass is in use moved relative to the at least one anvil plate on sufficiently accelerating the sensor with a component in a direction generally perpendicular to the plane of the sensing plate, thereby altering the capacitive coupling between the mass and the at least one anvil plate.

Preferably, the at least two beams extend about the periphery of the mass. By providing beams of extended length, particularly with a folded configuration, this increased length contributes greatly to provide a reliably consistent operation.

Preferably, the mass and the at least two beams are shaped and/or dimensioned to provide openings which control damping of the mass.

Preferably, the frame and the mass are integrally formed.

Preferably, the frame comprises a peripheral frame within which the mass is movably disposed.

Preferably, the mass is of quadrilateral, preferably rectangular, shape.

More preferably, the at least two beams each extend along at least one side of the mass.

Still more preferably, the at least two beams each extend along at least two sides of the mass.

Preferably, the acceleration sensor comprises four beams connecting respective sides of the mass to the frame.

Preferably, the acceleration sensor further comprises a layer of a patterned conductive, preferably copper, foil disposed between the at least one anvil plate and the sensing plate to reduce stray capacitance.

Preferably, the frame comprises a plurality of segments. In a preferred embodiment the mass is not electrically connected to the frame.

Preferably, the acceleration sensor further comprises at least one spacer disposed between the at least one anvil plate and the sensing plate.

Preferably, the acceleration sensor comprises first and second anvil plates between which the sensing plate is disposed, and wherein the sensing plate is configured such that the mass is in use moved closer to a respective one of the anvil plates on sufficiently accelerating the sensor with a component in a respective one of the directions generally perpendicular to the plane of the sensing plate, thereby altering the capacitive coupling between the sensing plate and the first and second anvil plates. In providing the plates in a parallel relationship, the sensor is insensitive to off-axis accelerations.

Preferably, the acceleration sensor comprises first and second spacers disposed between the sensing plate and respective ones of the first and second anvil plates.

A preferred embodiment of the present invention provides an acceleration switch, comprising: a sensing plate and an anvil plate, the sensing plate being spaced from the anvil plate, the sensing plate comprising a mass and an integral peripheral frame, the mass being disposed within the peripheral frame and supported from the peripheral frame by at least two beams, each of the beams comprising at least two folded beams, each of the folded beams comprising at least two connected beams, whereby the mass is enabled to make an electrical connection between the anvil plate and the peripheral frame when the switch is sufficiently accelerated in a direction generally perpendicular to the plane of the sensing plate.

Another preferred embodiment of the present invention provides an accelerometer, comprising: a sensing plate and an anvil plate, the sensing plate being separated from the anvil plate by a non-conducting material, the sensing plate comprising a mass and a peripheral frame, the mass being disposed within the peripheral frame, joined to the peripheral frame, and supported from the peripheral frame by at least two beams, with each beam extending along the perimeter of the mass, and the mass being connected to the anvil plate via measurement circuitry.

Preferred embodiments of the present invention will now be described hereinbelow by way of example only with reference to the accompanying drawings, in which:

Figure 1 illustrates a perspective view of an acceleration switch in accordance with a first embodiment of the present invention;

Figure 2 illustrates an exploded perspective view of the acceleration switch of Figure 1;

Figure 3 illustrates a plan view of the sensing plate of the acceleration switch of Figure 1;

Figure 4 illustrates in enlarged scale a fragmentary plan view of the sensing plate of Figure 3;

Figure 5 illustrates a plan view of the sensing plate of an acceleration switch in accordance with a second embodiment of the present invention;

Figure 6 illustrates a plan view of the sensing plate of an acceleration sensor in accordance with a third embodiment of the present invention;

Figure 7 illustrates a plan view of the sensing plate of an acceleration sensor in accordance with a fourth embodiment of the present invention;

Figure 8 schematically illustrates a measurement system incorporating an acceleration sensor of the kind of the third and fourth embodiments; and

Figure 9 illustrates a plan view of a patterned foil for use with the acceleration sensors of the third and fourth embodiments.

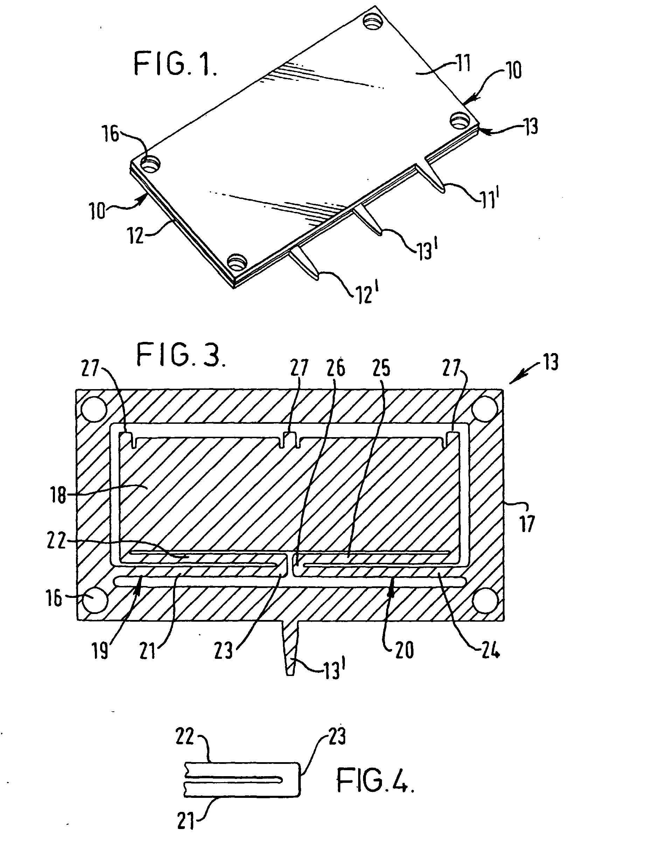

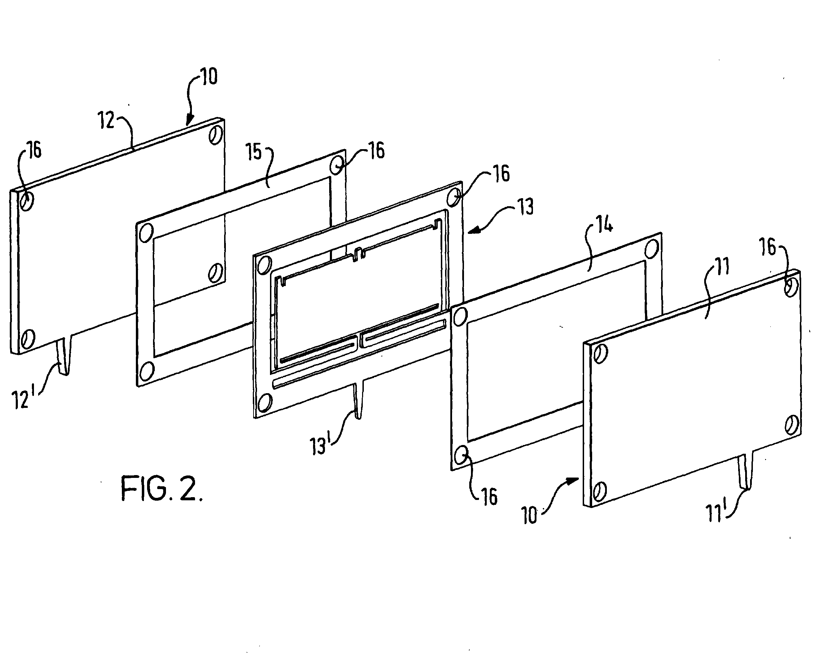

Figures 1 to 4 illustrate an acceleration switch in accordance with a first embodiment of the present invention.

The acceleration switch, formed generally in the manner of a diving board, comprises an anvil casing 10 which comprises first and second casing plates 11, 12, a sensing plate 13 disposed between the first and second casing plates 11, 12, and first and second non-conductive spacers 14, 15, in this embodiment adhesive layers, separating the sensing plate 13 and respective ones of the first and second casing plates 11, 12, all further joined together by adhesive extending through alignment holes 16 in the corners thereof.

The first and second casing plates 11, 12 are fabricated from a non-magnetic, conductive material, in this embodiment a planar sheet of phosphor bronze PB 102, and have a thickness of about 1 mm, which material and thickness provide an anvil casing 10 of high mechanical stability. The first and second casing plates 11, 12 each include a contact 11', 12' for providing a means of electrical contact with external circuitry. In this embodiment the first and second casing plates 11, 12 are fabricated by stamping or etching sheet material.

The sensing plate 13 is fabricated from a non-magnetic, conductive spring material, in this embodiment a planar sheet of phosphor bronze PB 102, and has a thickness to provide a flexible member. The sensing plate 13 includes a contact 13' for providing a means of electrical contact with external circuitry. In this embodiment the sensing plate 13 is fabricated by stamping or etching sheet material.

The sensing plate 13 comprises a rectangular peripheral frame 17, in this embodiment of oblong shape, a rectangular flexure mass 18, in this embodiment of oblong shape, disposed within the frame 17, and first and second beams 19, 20 connecting opposed ends of one long side of the mass 18 to opposed sides of the frame 17. The first beam 19 comprises a first beam element 21 which extends from one end of one side of the frame 17 in a direction parallel to the adjacent side of the frame 17 to a mid point of that adjacent side of the frame 17, a second beam element 22 which extends from the one end of the one long side of the mass 18 adjacent the one side of the frame 17 in a direction parallel to the one long side of the mass 18 to a mid point of that one long side of the mass 18, and a third, interconnecting beam element 23 which interconnects the distal ends of the first and second beam elements 21, 22 and extends parallel to the one side of the frame 17. The second beam 20 comprises a first beam element 24 which extends from the one end of the other side of the frame 17 opposite the one side of the frame 17 in a direction parallel to the adjacent side of the frame 17 to a mid point of that adjacent side of the frame 17, a second beam element 25 which extends from the other end of the one long side of the mass 18 adjacent the other side of the frame 17 in a direction parallel to the one long side of the mass 18 to a mid point of that one long side of the mass 18, and a third, interconnecting beam element 26 which interconnects the distal ends of the first and second beam elements 24, 25 and extends parallel to the other side of the frame 17.

In this embodiment the flexure mass 18 includes contact prongs 27, which in this embodiment are gold tipped, located along the opposite long side thereof to which the first and second beams 19, 20 are connected, which prongs 27 on deflection of the mass 18 about the first and second beams 19, 20 make a low impedance contact with a respective one of the first and second anvil plates 11, 12.

The first and second spacers 14, 15 comprise either Kapton or a glass fibre mesh impregnated with a heat and/or pressure setting adhesive. The thickness of the spacers 14, 15 is closely controlled to achieve a spacing of from 50 to 100 μm between the sensing plate 13 and the first and second casing plates 11, 12. Such narrow spacings enable the switch to operate within milliseconds of an accelerative stimulus.

In use, the flexure mass 18 moves, by bending of the first and second beams 19, 20, with respect to the peripheral frame 17 when the switch undergoes a change in momentum, and at a sufficient acceleration the contact prongs 27 on the mass 18 contact a respective one of the first and second anvil plates 11, 12 depending upon the direction of acceleration. In a preferred embodiment the switch is constructed such that the flexure mass 18 responds to an imposed acceleration in an overdamped manner, such as to act as a low pass filter and thereby reduce high frequency resonance of the mass 18 and prevent false triggering.

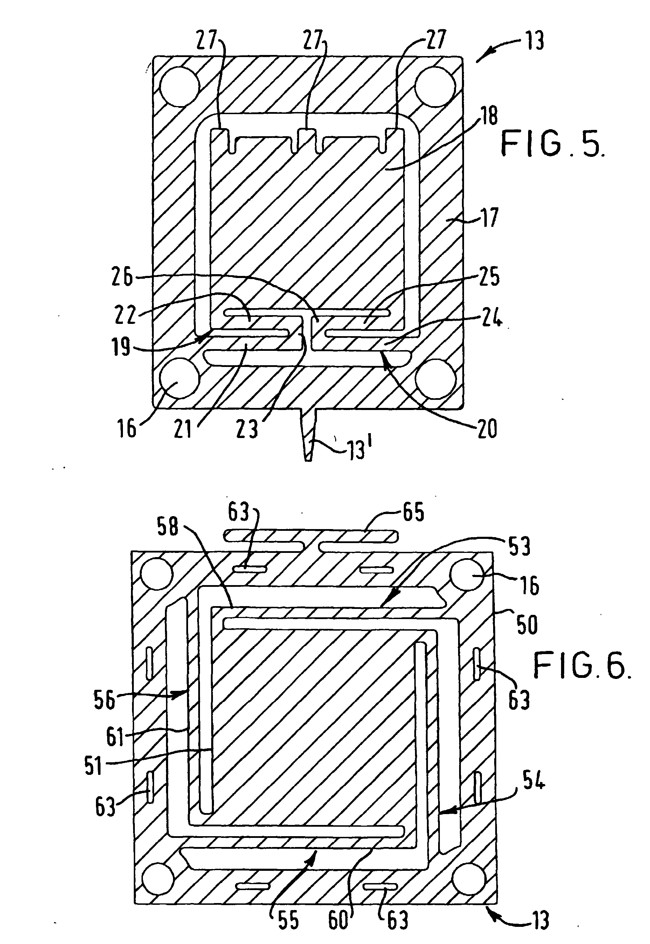

Figure 5 illustrates the sensing plate 13 of an acceleration switch in accordance with a second embodiment of the present invention. This acceleration switch is substantially identical to that of the acceleration switch of the above-described first embodiment, and thus, in order to avoid unnecessary duplication of description, only the differences will be described in detail, with like parts being designated by like reference signs. This acceleration switch differs only in being of square construction, with the rectangular peripheral frame 17 and the rectangular flexure mass 18 being of square shape, and in tat the sensing plate 13 is configured, notably by tuning the physical parameters of the flexure mass 18 and the first and second beams 19, 20, to switch at a different level of applied force. Operation of this acceleration switch is the same as for the above-described first embodiment.

Figure 6 illustrates the sensing plate 13 of an acceleration sensor in accordance with a third embodiment of the present invention. This capacitive-effect acceleration sensor is of a similar construction to that of the acceleration switch of the above-described first embodiment, and thus, in order to avoid unnecessary duplication of description, only the differences will be described in detail, with like parts being designated by like reference signs. The construction of this acceleration sensor differs only in being of square construction and in the configuration of the sensing plate 13.

The sensing plate 13 comprises a rectangular peripheral frame 50, in this embodiment of square shape, a rectangular flexure mass 51, in this embodiment of square shape, disposed within the frame 50, and first to fourth beams 53, 54, 55, 56 which connect respective ones of the sides of the mass 51 to respective ones of the sides of the frame 50. Each of the beams 53, 54, 55, 56 comprises a beam element 58, 59, 60, 61 which extends parallel to a respective one of the sides of the mass 51 and connects one end of each side of the mass 51, in this embodiment a rearmost end in a clockwise sense when viewed from above, to a respective side of the frame 50. This configuration advantageously ensures that the mass 51 moves in parallel relationship with respect to the anvil plates 11, 12, between which the mass 51 is sandwiched. Further, the gas, usually air, trapped in the sandwich structure provides for squeeze film damping of the mass 51, and by appropriate dimensioning and/or shaping of the mass 51 and the beams 53, 54, 55, 56 and spacing of the sensing plate 13 and the anvil plates 11, 12, the damping characteristics of the sensor can be tuned to increase the linearity of the response of the sensor.

In this capacitive-effect sensor the flexure mass 51 forms first and second capacitors C1, C2 with respective ones of the first and second anvil plates 11, 12, such that the sensor, when connected to specifically adapted electronic circuitry, linearises this capacitance change effect according to the calculation

$$g \cong (C1-C2)/(C1+C2).$$

The sensing plate 13, as with the sensing plate 13 of the above-described first embodiment, includes alignment holes 16 at the corners of the peripheral frame 50 for aligning the anvil plates 11, 12, the sensing plate 13 and the interposed spacers 14, 15. The sensing plate 13 further includes a plurality of openings 63 in the peripheral frame 50 which act both to reduce stray capacitance and provide regions for anchoring of the adhesive. The sensing plate 13 further includes a contact 65 for providing a means of electrical contact with external circuitry.

In use, the flexure mass 51 moves, by bending of the beams 53, 54, 55, 56, relative to the peripheral frame 50 when the sensor undergoes a change in momentum, such as to be moved closer to a respective one of the first and second anvil plates 11, 12 depending upon the direction of acceleration. As discussed hereinabove, this relative movement of the sensing plate 13 and the anvil plates 11, 12 is sensed by the change in the capacitive effect between the sensing plate 13 and one or both of the first and second anvil plates 11, 12.

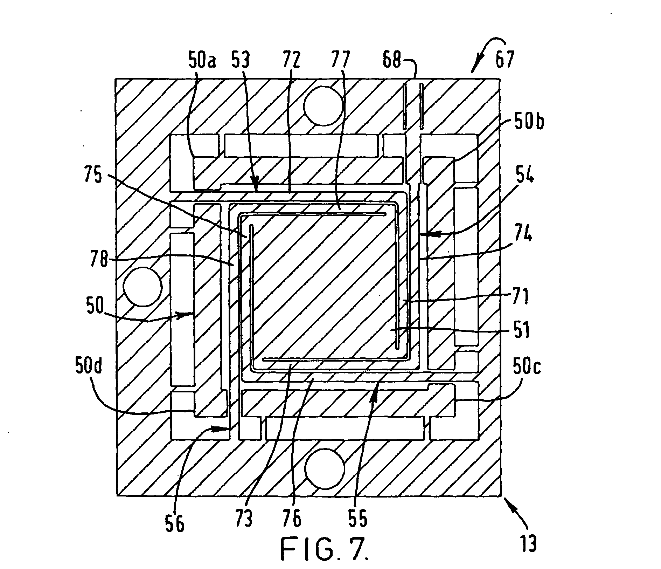

Figure 7 illustrates the sensing plate 13 of an acceleration sensor in accordance with a fourth embodiment of the present invention. This capacitive-effect acceleration sensor is similar to that of the acceleration sensor of the above-described third embodiment, and thus, in order to avoid unnecessary duplication of description, only the differences will be described in detail, with like parts being designated by like reference signs. This acceleration sensor differs only in the construction of the sensing plate 13. The sensing plate 13 differs primarily in that the flexure mass 51 is not electrically connected to the peripheral frame 50 and in that the peripheral frame 50 is provided as a plurality of segments 50a, 50b, 50c, 50d. The sensing plate 13 includes an assembly frame 67 to which the first to fourth beams 53, 54, 55, 56 and the segments 50a, 50b, 50c, 50d of the peripheral frame 50 are attached prior to assembly, which assembly frame 67 is broken away after assembly. This configuration is particularly advantageous in that, in not electrically connecting the peripheral frame 50 to the flexure mass 51, stray capacitances are reduced. On assembly, the assembly frame 67 is broken away to leave exposed only a leg 68 of one of the beams 54 which provides a means for electrically connecting external circuitry to the flexure mass 51. The sensing plate 13 further differs in that each of the beams 53, 54, 55, 56 comprises first and second beam elements 71, 72; 73, 74; 75, 76; 77, 78 which extend orthogonally to one another about two sides of the flexure mass 51. Operation of this capacitive-effect acceleration sensor is the same as for the above-described third embodiment.

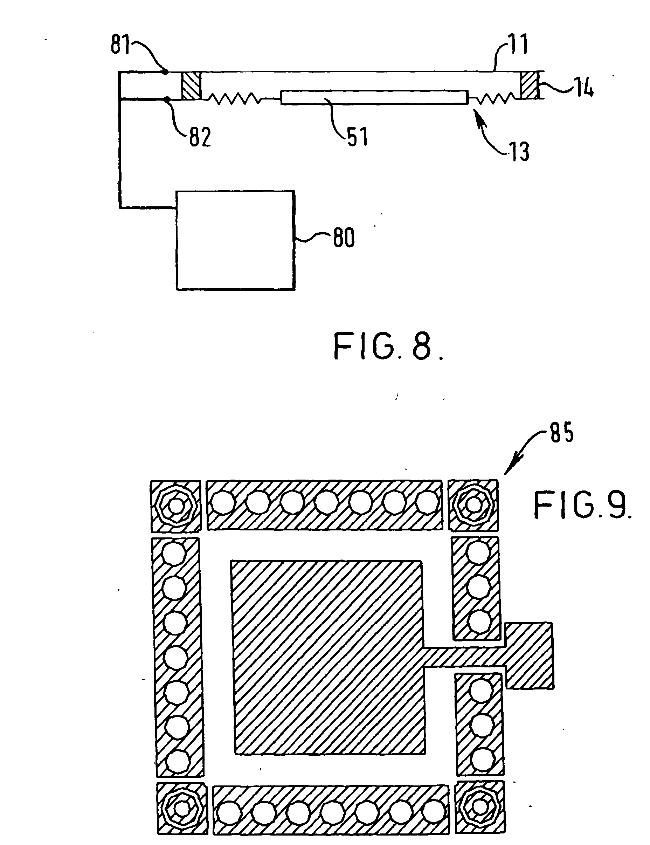

Figure 8 schematically illustrates a measurement system comprising an acceleration sensor of the kind of the above-described third and fourth embodiments coupled to capacitance measurement circuitry 80. In this schematic illustration the acceleration sensor is illustrated as comprising only one anvil plate 11, and the anvil plate 11 and the sensing plate 13 are electrically connected by electrodes 81, 82 to the measurement circuitry 80. The measurement circuitry 80 is specifically adapted to provide a substantially linear output in proportion to the variation in capacitance which occurs when the flexure mass 51 is moved relative to the anvil plate 11. As will be understood, since the acceleration sensors of the above-described embodiments are configured such that only a small gap is provided between the anvil plates 11, 12 and the sensing plate 13, the capacitance measured by the measurement circuitry 80 alters as the flexure mass 51 moves.

Figure 9 illustrates a patterned copper foil 85 which can be applied to each of the anvil plates 11, 12 of the acceleration sensors of the above-described third and fourth embodiments to reduce stray capacitance. As these patterned foils 85 are required to remain flat and mechanically sound, the foils 85 are glued to the anvil plates 11, 12. In a preferred embodiment several such foils 85 may be utilized both to increase the linearity of the sensor and reduce any temperature drift. In another preferred embodiment the anvil plates 11, 12 may be configured to provide electrical shielding.

**Claims**

1. An acceleration switch, comprising:

   at least one anvil plate; and
   a sensing plate normally spaced from the at least one anvil plate;
   wherein the sensing plate comprises a frame, a mass movably disposed relative to the frame and at least two folded beams supporting the mass, the sensing plate being configured such that the mass is in use moved to make electrical connection with the at least one anvil plate on sufficiently accelerating the switch with a component in a direction generally perpendicular to the plane of the sensing plate.

2. The acceleration switch of claim 1, wherein each of the beams comprises at least two interconnected beam elements.

3. The acceleration switch of claim 2, wherein the at least two beam elements are parallel.

4. The acceleration switch of any of claims 1 to 3, wherein the frame and the mass are integrally formed.

**5.** The acceleration switch of any of claims 1 to 4, wherein the frame comprises a peripheral frame within which the mass is movably disposed.

**6.** The acceleration switch of any of claims 1 to 5, wherein the mass includes a plurality of contacts for contacting the at least one anvil plate.

**7.** The acceleration switch of any of claims 1 to 6, further comprising at least one spacer disposed between the at least one anvil plate and the sensing plate.

**8.** The acceleration switch of any of claims 1 to 7, comprising first and second anvil plates between which the sensing plate is disposed, and wherein the sensing plate is configured such that the mass is in use moved to make electrical connection with a respective one of the anvil plates on sufficiently accelerating the switch with a component in a respective one of the directions generally perpendicular to the plane of the sensing plate.

**9.** The acceleration switch of claim 8 when appendant upon claim 7, comprising first and second spacers disposed between the sensing plate and respective ones of the first and second anvil plates.

**10.** An acceleration sensor, comprising:

at least one anvil plate; and
a sensing plate spaced from the at least one anvil plate;
wherein the sensing plate comprises a frame, a mass movably disposed relative to the frame and at least two beams supporting the mass, the sensing plate being configured such that the mass is in use moved relative to the at least one anvil plate on sufficiently accelerating the sensor with a component in a direction generally perpendicular to the plane of the sensing plate, thereby altering the spacing between the mass and the at least one anvil plate.

**11.** The acceleration sensor of claim 10, wherein the at least two beams extend about the periphery of the mass.

**12.** The acceleration sensor of claim 10 or 11, wherein the mass and the at least two beams are shaped and/or dimensioned to provide openings which control damping of the mass.

**13.** The acceleration sensor of any of claims 10 to 12, wherein the frame and the mass are integrally formed.

**14.** The acceleration sensor of any of claims 10 to 13, wherein the frame comprises a peripheral frame within which the mass is movably disposed.

**15.** The acceleration sensor of any of claims 10 to 14, wherein the mass is of quadrilateral, preferably rectangular, shape.

**16.** The acceleration sensor of claim 15, wherein the at least two beams each extend along at least one side of the mass.

**17.** The acceleration sensor of claim 16, wherein the at least two beams each extend along at least two sides of the mass.

**18.** The acceleration sensor of any of claims 10 to 17, comprising four beams connecting respective sides of the mass to the frame.

**19.** The acceleration sensor of any of claims 10 to 18, further comprising a layer of a patterned conductive, preferably copper, foil disposed between the at least one anvil plate and the sensing plate to reduce stray capacitance.

**20.** The acceleration sensor of any of claims 10 to 19, wherein the frame comprises a plurality of segments.

**21.** The acceleration sensor of any of claims 10 to 20, further comprising at least one spacer disposed between the at least one anvil plate and the sensing plate.

**22.** The acceleration sensor of any of claims 10 to 21, comprising first and second anvil plates between which the sensing plate is disposed, and wherein the sensing plate is configured such that the mass is in use moved closer to a respective one of the anvil plates on sufficiently accelerating the sensor with a component in a respective one of the directions generally perpendicular to the plane of the sensing plate, thereby altering the spacing between the sensing plate and the first and second anvil plates.

**23.** The acceleration sensor of claim 22 when appendant upon claim 21, comprising first and second spacers disposed between the sensing plate and respective ones of the first and second anvil plates.

FIG. 1.

FIG. 3.

FIG. 4.

FIG. 2.

FIG.5.

FIG.6.

FIG. 7.

FIG. 8.

FIG. 9.

**European Patent Office**

## EUROPEAN SEARCH REPORT

**Application Number**

EP 00 30 1426

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | PATENT ABSTRACTS OF JAPAN vol. 1998, no. 08, 30 June 1998 (1998-06-30) & JP 10 068742 A (AKEBONO BRAKE IND CO LTD), 10 March 1998 (1998-03-10) * abstract * | 1-9 | G01P15/135 G01P15/08 G01P15/125 |
| P,Y | US 5 894 144 A (MORI) 13 April 1999 (1999-04-13) * abstract; figures 1-3,7-9 * | 1-7 | |
| Y | & JP 10 132848 A | 1-7 | |
| Y | US 4 694 687 A (BONIN WAYNE A ET AL) 22 September 1987 (1987-09-22) | 1-9 | |
| X | * column 4, line 53 - column 5, line 53; figure 3 * | 10-23 | |
| Y | US 5 777 226 A (IP MATTHEW W) 7 July 1998 (1998-07-07) | 1-9 | |
| X | * column 4, paragraph 4; figures 1,2,5 * * column 6, line 56 - column 8, line 34 * | 10-23 | |
| Y | EP 0 395 922 A (MIKROELEKTRONIK ROBERT HARNAU) 7 November 1990 (1990-11-07) | 1-9 | TECHNICAL FIELDS SEARCHED (Int.Cl.7) G01P |
| A | * figure 3 * | 16-18 | |
| A | EP 0 542 436 A (TEXAS INSTRUMENTS INC) 19 May 1993 (1993-05-19) * column 5, line 57 - column 7, line 46; figure 19 * | 1,10 | |
| A | GB 2 192 718 A (STC PLC) 20 January 1988 (1988-01-20) * figures 1-3 * | 1-3 | |

The present search report has been drawn up for all claims

| Place of search | Date of completion of the search | Examiner |
|---|---|---|
| MUNICH | 5 June 2000 | Felicetti, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 031 837 A1

**ANNEX TO THE EUROPEAN SEARCH REPORT
ON EUROPEAN PATENT APPLICATION NO.**

EP 00 30 1426

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2000

| Patent document cited in search report | | Publication date | Patent family member(s) | | Publication date |
|---|---|---|---|---|---|
| JP 10068742 | A | 10-03-1998 | NONE | | |
| US 5894144 | A | 13-04-1999 | JP 10132848 A | | 22-05-1998 |
| US 4694687 | A | 22-09-1987 | NONE | | |
| US 5777226 | A | 07-07-1998 | AU 1987895 A | | 17-10-1995 |
| | | | CA 2185571 A | | 05-10-1995 |
| | | | EP 0753156 A | | 15-01-1997 |
| | | | JP 2825664 B | | 18-11-1998 |
| | | | JP 9506975 T | | 08-07-1997 |
| | | | WO 9526509 A | | 05-10-1995 |
| | | | US 5652384 A | | 29-07-1997 |
| EP 0395922 | A | 07-11-1990 | DD 282530 A | | 12-09-1990 |
| EP 0542436 | A | 19-05-1993 | US 5345823 A | | 13-09-1994 |
| | | | DE 69210179 D | | 30-05-1996 |
| | | | DE 69210179 T | | 02-10-1996 |
| | | | JP 5223845 A | | 03-09-1993 |
| GB 2192718 | A | 20-01-1988 | NONE | | |

EPO FORM P0459

For more details about this annex : see Official Journal of the European Patent Office, No. 12/82

13